# EUROPEAN PATENT SPECIFICATION

(11) **EP 2 839 957 B1**
(45) Date of publication and mention of the grant of the patent: **13.03.2019**
(21) Application number: 14193901.7
(22) Date of filing: 12.04.2011
(51) Int. Cl.: E04F 13/08, E04F 15/02, B44C 5/04, B32B 21/02

(54) **Embossed and digital printed building panel and method for its fabrication**
Geprägte und digital bedruckte Bauplatte und Verfahren zu deren Herstellung
Panneau de construction imprimé numériquement et avec un relief et sa méthode de fabrication

(30) Priority: 13.04.2010 SE 1050364
(43) Date of publication of application: 25.02.2015
(62) Divisional of application: 11769174.1
(73) Proprietor: Välinge Innovation AB, 263 65 Viken (SE)
(72) Inventor: Håkansson, Niclas, SE-263 65 Viken (SE); Jacobsson, Jan, SE-261 30 Landskrona (SE); Ryberg, Melker, SE-211 21 Malmö (SE); Pervan, Darko, SE-263 61 Viken (SE); Ziegler, Göran, SE-263 62 Viken (SE)
(74) Representative: Westeman, Maria

(56) References cited:
- WO-A2-2009/153680
- DE-A1-102007 062 600
- US-A1- 2009 151 866
- US-A1- 2009 155 612

## Description

### Technical field

The disclosure generally relates to the field of fibre-based panels with a decorative wear resistant surface, preferably floor and wall panels. The disclosure relates to building panels with such decorative surfaces and to production methods to produce such panels.

### Field of Application

Embodiments of the present invention not presently claimed are particularly suitable for use in floating floors, which are formed of floor panels comprising a core and a decorative wear resistant solid surface layer comprising fibres, binders and wear resistant particles that have been applied on the core as a powder as described in WO 2009/065 769. The following description of technique, problems of known systems and objects and features of the invention will therefore, as a non-restrictive example, be aimed above all at this field of application and in particular at floorings which are similar to traditional floating wood fibre based laminate floorings. Embodiments of the invention do not exclude floors that are glued down to a sub floor.

It should be emphasized that embodiments of the invention not presently claimed can be used to produce a surface layer integrated with a core or a separate surface layer, which is for example applied to a core in order to form a panel. The invention can also be used in building panels such as for example wall panels, ceilings, and furniture components and similar.

### Background

Wood fibre based direct pressed laminated flooring (DPL) usually comprises a core of a 6-12 mm fibre board, a 0.2 mm thick upper decorative surface layer of laminate and a 0.1-0.2 mm thick lower balancing layer of laminate, plastic, paper or like material.
The surface layer of a laminate floor is characterized in that the decorative and wear properties are generally obtained with two separate layers one over the other. The decorative layer is generally a printed paper and the wear layer is a transparent overlay paper, which comprises small aluminium oxide particles.

A high quality laminate flooring uses a printed paper with a print that comprises small dots with a size of about 0.10 mm and which are spaced from each other. A minimum line width is about 0.2 mm and there are about 125 - 200 dots per inch. The print is applied on the surface of the paper.

The printed decorative paper and the overlay are impregnated with melamine resin and laminated to a wood fibre based core under heat and pressure.

Some laminate flooring have a decorative surface that is printed on the core by direct or digital printing. A HDF board is coated with several base layers and the print is provided on the coated surface. The print is thereafter coated with several protective and transparent wear layers

High definition digital printers use a non-impact printing processes. The printer has print heads that "fire" drops of ink from the print heads to the substrate.

DPI is used to define the printing quality of a digital printer. It describes the resolution number of dots per inch in the digital print.

A relatively low resolution is typically in the range of 60 to 90 DPI. This allows a high printing speed and a low ink content. A resolution of 90 -150 DPI is generally sufficient to provide prints that can be used in flooring applications. 150 - 300 DPI is generally sufficient to for example print wood grains structures of the same quality presently used in conventional laminate floorings.

Industrial printers can print patterns with a resolution of 300 - 600 DPI and even more. The resolution and printing speed is improving continuously.

Recently new "paper free" floor types have been developed with solid surfaces comprising a substantially homogenous mix of fibres, binders and wear resistant particles.

The wear resistant particles are preferably aluminium oxide particles, the binders are preferably thermosetting resins such as amino resins and the fibres are preferably wood based. Other suitable wear resistant materials are for example silica or silicon carbide. In most applications decorative particles such as for example colour pigments are included in the homogenous mix. In general all these materials are preferably applied in dry form as a mixed powder on a HDF core and cured under heat and pressure to a 0.1 - 1.0 mm solid layer.
Several advantages over known technology and especially over conventional laminate floorings can be obtained:
- The wear resistant surface layer, which is a homogenous mix, can be made much thicker and a wear resistance is achieved, which is considerably higher.
- New and very advanced decorative effects can be obtained with deep embossing and by separate decorative materials, which can be incorporated into the homogenous surface layer and coordinated with the embossing.
- An increased impact resistance can be reached with a homogenous surface layer, which is thicker and has a higher density.
- The homogenous surface layer can comprise particles that have a positive impact on sound and moisture properties.
- Production costs can be reduced since low cost and even recycled materials can be used and several production steps can be eliminated.
Powder technology is very suitable to produce a decorative surface layer, which is a copy of stone and ceramics. It is however more difficult to create designs such as for example wood decors.
Powder based floors can reach a much higher market share if advanced designs similar to for example wood floorings can be made in a cost efficient way and with a high wear resistance as described in this application.

### Definition of Some Terms

In the following text, the visible surface of the installed floor panel is called "front side", while the opposite side of the floor panel, facing the sub floor, is called "rear side". By "surface layer" are meant all layers which give the panel its decorative properties and its wear resistance and which are applied to the core closest to the front side covering preferably the entire front side of the floorboard.

By "horizontal plane" is meant a plane, which extends parallel to the outer part of the surface layer. By "horizontally" is meant parallel to the horizontal plane and by "vertically" is meant perpendicularly to the horizontal plane. By "up" is meant towards the front side and by "down" towards the rear side. By a "WFF mix" is meant a mix of materials comprising fibres, binders, wear resistant particles and, optionally, a colour substance, that is preferably applied as powder on a carrier.

By "WFF floor" is meant a floor panel comprising a solid surface, which is obtained by a WFF mix that is preferably applied as dry powder on a core, such as for example HDF, and cured under heat and pressure.

By "pigments for digital print ink" is meant a material that changes the colour of reflected or transmitted light as the result of wavelength-selective absorption.

By "dye ink" is meant a coloured substance that has an affinity to the substrate to which it is being applied. The dye is generally applied in an aqueous solution, which also can contain a binder, and may require a mordant to improve the fastness of the dye on the fibre. In contrast to pigments that are small insoluble particles, a dye is completely soluble like sugar in water.

By "aqueous or water based ink" is meant an ink where water is used as liquid substance in the ink. The water-based liquid carries the pigments. A binder is present in the system as well to bind the pigments to the substrate.

By "solvent based ink" is meant an ink that generally contains three major parts such as a fluid carrier, pigments and resins. Technically, solvent ink refers generally only to the oil-based carrier portion of the ink that keeps the other components in liquid form and once applied to a surface through jetting evaporates.

By "UV curable Inks" is meant an ink that after printing is cured by exposure to strong UV -light.

By "refined fibres" are meant wood fibres which are only mechanically worked, i.e. not transparent and treated in a way that the lignin content is essentially unchanged.

By "processed fibres" are meant wood fibres that are processed in order to remove the lignin e.g. bleached and semi transparent. Processed fibres are preferably transparent in a cured binder.

### Known Technique and Problems thereof

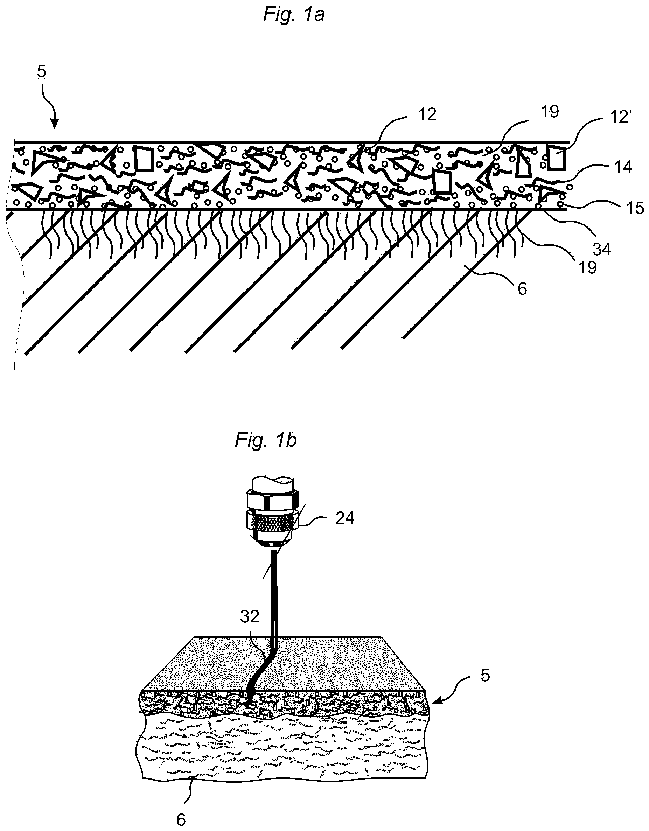

Figure 1 shows a known embodiment of the new "paper free" WFF floor with a solid surface 5 comprising a WFF mix of fibres, preferably wood fibres 14, small hard wear resistant particles 12, 12' and a binder 19. The wood fibres are generally refined, mechanically worked, and of the same type as used in HDF and particleboard, i.e. treated in a way that the lignin content is essentially unchanged. They comprise natural resins such as lignin. The wear resistant particles (12,12') are preferably aluminium oxide particles. The surface layer comprises preferably also colour pigments 15 or other decorative materials or chemicals.

A preferable binder is melamine or urea formaldehyde resin. Any other binder, preferably synthetic thermosetting resins, can be used. The solid WFF layer 5 is generally applied in dry powder form on a wood based core 6, such as for example HDF, and cured under heat and pressure. The binder 19 penetrates into the upper part of the core 34 and connects the solid surface layer to the core.

A decorative pattern can be applied in line on a scattered or pre-pressed surface of a WFF mix with for example an ink jet digital device, which allows the ink to penetrate into the powder. A printed pattern with a high wear resistance can be obtained if the ink is included into the surface such that it penetrates below the top surface.

The major disadvantage is that such ink jet printing requires a considerable amount of ink and this increase the production costs. A deep high definition print with a resolution exceeding 100 DPI cannot be obtained since the ink floats vertically and horizontally along the fibres when it is applied on the powder layer.

Systems and methods for creating textured laminates are described in US 2009/0151866. This document discloses a system and method for viewing proposed texture designs for textured decorative laminates without having to make a press plate and a sample laminate. A transparent sheet, such as a cellulose acetate sheet, having an image printed thereon, is used. The printed image comprises a two-dimensional representation of a three-dimensional texture design. The transparent sheet can be laid over the decorative laminate such that a viewer can get a visual impression of the texture design in conjunction with the decorative design.

WO 2009/153680 discloses a method for manufacturing a laminate product comprising a décor sheet, wherein the decor is applied by means of one or more digital printer. The décor sheet is pressed against a press element provided with a relief. The relief at the press plate has fixed dimensions. Contrary thereto, the motif of the décor may alter in function of stretching, which thus may result in that the stretched motif is no longer in accordance with the pattern of the relief of the press plate. This is remedied by having the décor application process run in a controlled manner and providing the décor in function of the respective deformation. The décor can thus be adapted in function of the stretching.

### Objects and Summary

A first objective of the invention is to provide a cost efficient method to produce advanced surface designs.

The second objective of the invention is to provide printing methods that can be use in powder based surfaces and where the print can be incorporated into the surface layer.

A first aspect of the invention not presently claimed is a method of manufacturing a building panel with a decorative surface layer. The method comprises the steps below and preferably performed in the listed sequence:
- applying a first layer of a mix, comprising fibres (14), a binder (19) and wear resistant particles (12), an optional colour substance, preferably a colour pigment, on a substrate, preferably a core (6);
- printing a first print with a first pattern on the first layer;
- applying a second layer of a mix, comprising fibres (14), colour substance, preferably a colour pigment, a binder (19) and wear resistant particles (12), on the first print;
- printing a second print on the second layer with a pattern that is essentially the same as the first pattern; and
- curing the layers and the prints by providing heat and pressure.

The panel and the production method according to embodiments of the invention not presently claimed make it possible to produce very advanced decorative patterns with high wear resistance in a cost effective way. The mix applied, as a first and/or a second layer can preferably comprise a colour substance, preferably a colour pigment.

A second aspect of the invention not presently claimed is a method of manufacturing a building panel with a decorative surface layer. The panel comprises a core and the decorative surface layer comprises a print applied on a mix comprising fibres, colour substance, a binder and wear resistant particles whereby the method comprises the steps of:
- applying the mix comprising a dry base colour on the core;
- printing the print on the mix; and
- spraying a liquid colour substance on the mix.

The decorative surface layer is according to the method described above obtained by a combination of a dry base colour, a print and a liquid colour substance. The advantage is that a part, preferably the major part, of the advanced decorative features can be obtained in a cost efficient way by using a base colour in the mix and by spraying a colour substance over the base colour or the printed base colour. The print, which preferably is made by digital ink printing, can be applied on only some parts of the surface and this can be used to increase printing speed and/or to reduce the ink content.

By printing (POD - Printing On Demand) the printed position of each ink drop is controlled by high precision.

By spraying by e.g. a nozzle the ink drops are randomly distributed over an elected area. A large area is faster to cover by spraying compared to POD.

A third aspect of the invention not presently claimed is a building panel comprising a decorative surface layer connected to a core. The decorative surface layer may comprise a print, fibres, an optional colour substance, preferably a colour pigment, a binder and wear resistant particles. The decorative surface layer comprises a first horizontal plane and a second horizontal plane below the first horizontal plane and a vertical plane perpendicular to the horizontal planes. The concentration of colour of the print, preferably along the vertical plane, may be higher in the second horizontal plane then the colour content in the first horizontal plane.

Such a panel can be produced with a high definition printed surface design that extends vertically below the upper parts of the surface layer and that maintains its decorative pattern when the surface is subjected to considerable wears.

A fourth aspect of the invention not presently claimed is a building panel comprising a decorative surface connected to a core wherein the decorative surface layer may comprise a print, fibres, an optional colour substance, preferably a colour pigment, a binder and wear resistant particles. The print is a high definition print having a printing quality of at least 100 DPI and a depth, which is about the same as the thickness of the fibres.

Such decorative surfaces layer can be made with a print that extends into the surface to a depth that provides a wear resistance which is sufficient for flooring applications and that also provides a sufficient printing quality that can be used to for example print a wood design.

A fifth aspect of the invention not presently claimed is a method of manufacturing a building panel with a decorative surface layer. The panel comprises a core and the decorative surface layer may comprise a print applied on a powder mix comprising fibres, an optional colour substance, a binder and wear resistant particles, wherein the method comprises the steps below and preferably performed in the listed sequence:
- applying a first mix comprising a first dry base colour on the core;
- applying a second mix comprising a second dry base colour on first mix; and
- printing the print on the second mix.

The decorative surface layer is according to the method described above obtained by a combination of at least a first and a second mix that preferably comprises different base colours. The advantage is that the second mix can be applied on a part of the surface and a two colour base layer can be obtained that can for example provide a design similar to the basic design of wood. The wood grain design can be made with digital printing. The design effects can be improved by spraying a colour substance over the first and/or the second mix prior or after the digital printing. The print that preferably is made by digital ink printing can even in this embodiment be applied on only some parts of the surface and this can be used to increase printing speed and/or to reduce the ink content.

A sixth aspect of the invention is building panels comprising a decorative surface layer connected to a core wherein the decorative surface layer may comprise a digital print, and embossed surface portions. The panel surface comprises surface portions with a printed pattern that is in register with the embossing. At least two panels comprise surface portion with an identical embossing and with a printed pattern that varies between two panels.

The digital print is in this embodiment used to vary a pattern that is coordinated with an embossed press plate. The print can for example be made with a different colour or it can cover a larger or smaller part of the embossing. All panels or a majority of for example floor or wall panels can have individual designs that are partially or completely coordinated with an embossed surface structure that is made with the same press plate. It is preferred that the print is applied into a powder layer. The digital print can also be applied on a board or on a paper or foil material.

A seventh aspect of the invention not presently claimed is building panel comprising a decorative surface layer connected to a core wherein the decorative surface layer comprises a print. The panel surface comprises at least two layers with a printed pattern injected into at least the upper surface layer. The upper surface layer is semi transparent and the print extends vertically into the semi transparent layer. A base layer is provided between the core and the surface layer, said base layer is partly visible through the surface layer.

This embodiment offers the advantages that a 3D pattern can be created where the print of the surface layer and at least some parts of the print/colour from the base layer are visible. The first and second layers can have different patterns or the same patterns that are offset against each other.

A high quality 3D visual print/effect may be obtained by combining transparent or semi-transparent powder layers together with adding pigments or inkjet printing. A first print is provided on a base layer that can be the upper part of a board material or a powder layer that is applied on a substrate, preferably a board material. A second powder layer of transparent or semi-transparent particles is applied on the base layer as a second print on the top layer. The first and the second print may have essentially identical patterns or decors. Alternative the first and the second print can have partially or completely different patterns or decors. Several transparent or semi transparent layers can be used and they can have different transparency or colour shadings. The resolution, drop size, ink type, printing method etc. can vary between the layers.

The surface layer may comprise a thermoplastic material, for example vinyl, which preferably is applied in powder form on a substrate. This allows that the print can be injected in the layer of plastic powder particles. An improved design and increased wear resistance can be reached when a print is injected into a plastic layer. Aluminium oxide particles or other wear resistant particles can be included into the plastic powder and this can increase the wear resistance further. Wood fibres, other fibres and decorative particles can be added into the plastic powder. The transparent plastic layer can also comprise alpha cellulose fibres, binders and aluminium oxide particles.

A powder based surface layer comprising thermoplastic particles may be applied on a core, preferably of plastic or wood, which may comprise one or several layers with different density. A so called LVT floor panel can be produced with a powder based and digitally printed surface layer.

An embodiment of the seventh aspect not presently claimed is a panel comprising a thermosetting and a thermoplastic surface layer.

A base layer comprising a mix of wood fibres and a melamine binder is applied on a core material, for example a HDF core. This base layer may also comprise a colour substance and/or aluminium oxide particles and preferably a print.

An upper powder layer comprising a thermoplastic transparent material such as vinyl particles preferably mixed with aluminium oxide particles is applied on the base layer. Several plastic materials in powder form can be used such as E-PVC, S-PVC, PVA, PET, PS, SAN, PMMA and similar.

The plastic powder should preferably have a glass transition temperature below the intended processing temperature and a melting point higher than the intended processing temperature. The plastic can further comprise functional groups such as hydroxy-, carboxy - and amino functionalities. Blends of plastics can also be used.

A print may be injected into the upper layer and the core with the two layers may be placed in a press where the surface layer is cured under heat, in the range of about 140 - 200 °C and pressure in the range of about 20 - 60 kg/cm2, preferably about 40 kg/cm2, in a so called hot-hot process, in about 10 to about 60 seconds, preferably about 15 to about 35 seconds.

The base layer may be used to provide impact resistance, a base colour and to fuse the upper plastic layer to the panel core. The upper plastic layer may seal the panel against moisture penetration and a very stable panel can be obtained, especially if a thermoplastic layer is applied on the rear side of the panel.

Powder layers may comprise a mix of wood fibres, thermosetting binders in powder form (for example melamine-, urea-, or phenolic-formaldehyde resins) and thermoplastic powder particles.

An artificial wood veneer may be produced by providing several layers comprising a mix of wood fibres and plastic particles. Such veneer can be glued to a core material.

A base layer of wood fibres and thermoplastic particles is provided in powder form. This first layer comprises preferably wood fibres of for example ash, oak, birch, pine or any other wood species. The fibres are used to give the basic colour and design structure. A print with preferably rather large ink drops may be included into the first layer.

The plastic layer can be used to create very glossy surfaces in floor and wall panels. A floor panel with a fibre based core can for example be produced in a two step process where a first layer comprising fibres, binders and preferably a colour substance and/or a print is produced by curing the surface layer with heat and pressure. A second powder layer comprising plastic particles in powder form is applied in a second production step on the cured fibre layer. The plastic powder comprises preferably aluminium oxide particles. A digital print is preferably injected into the plastic powder, which is thereafter heated such that the plastic particles melt. The semi liquid plastic layer is cooled with a cooling device that can be a metal plate or cylinder. The cooling device can have an embossed or completely glossy surface. The first fibre layer is used to create a basic colour and to improve the impact properties of the panel.

Plastic powder can also be applied on the first fibre layer when the panel is hot after the pressing operation. No further heating is needed. A print can be applied on the hot semi liquid plastic surface and a second plastic powder layer can be applied over the print.

The gloss level of a pressed WFF product and conventional laminate flooring is generally controlled by the gloss level of the press plate, which is pressed against the surface during the curing of the resins. However, there are also other parameters that can be used to control the gloss level of the final product such as the material content and composition of the powder based WFF layer. A higher resin/wood powder ratio will for example have a positive effect and the gloss level can be increased if the resin content is increased. Digital printing can be used to change the gloss level in surface portions by applying and printing specific substances in different amounts into the powder prior to pressing. This method can be used to provide a matching between a printed design and the gloss level of various parts of the print. Controlled variations in the gloss level in the pressed surface can be obtained. The black parts in a granite stone design or the darker parts in a wood design can for example have a different gloss level than the lighter parts containing less ink or other types of ink or ink comprising a gloss controlling agent. By combining the gloss level control effect with the ink, a guaranteed perfect match between printed design and gloss level variations can be achieved. Gloss level controlling materials can also be applied in dry form into the powder. This method allows that repetition effects can be avoided since different gloss levels can be achieved with the same press plate. The variations in gloss level are most evident if the gloss of the press plate is in the range from so-called semi-gloss to a high-gloss level. The glossiness may naturally be verified by a visual inspection or by e.g. a ZGM Glossmeter 20, 60, 85.

An eighth aspect of the invention not presently claimed is a method to produce a decorative surface layer, which comprises portions with different gloss levels. The method comprises the steps below and preferably performed in the sequence listed:
- adapting a powder and an ink such that different gloss levels are obtained when the ink content varies and the powder with the ink is cured under heat and pressure;
- printing a print with ink drops on the powder layer such that surface portions are formed which comprise different contents of pigments or binders; and
- applying a press plate having essentially a uniform surface with an essentially uniform gloss level on the powder layer and the print.

A ninth aspect of the invention not presently claimed is a method to produce a decorative surface layer by printing with ink drops. The ink drops may be of variable size and/or variable colour and/or composition. The method comprises the steps below and preferably performed in the listed sequence:
- applying a base layer comprising powder on a substrate;
- positioning ink drops in the base layer at different vertically depths over each other; and
- applying a top layer comprising semi transparent powder on the base layer

The method may comprise a further step of printing a second print with ink drops on the top layer such that the average size of the ink drops in the top layer is smaller then the average size of the ink drops in the base layer. The method allows that, for example larger drops can be applied deeper than smaller drops that are applied close to the surface. The large drops provide sufficient colour coverage and the small drops provide a high resolution. The larger drops can be provided with print heads that can handle larger pigments. Larger drops allow that that ink with larger pigment size can be used and this will generally give a better saturation.

The small colour pigments may not be larger than 0.001 mm. Fibres should have an average a length of less than 0.5 mm and a thickness of less than 0.05 mm.

A tenth aspect of the invention not presently claimed is a method of manufacturing a building panel with a decorative surface layer. The method comprises the steps of:
- applying a layer comprising a powder on a substrate;
- printing a print with ink drops in the powder; and
- positioning the ink drops in the surface layer at different vertically depths.

The method provides a possibility to produce a building panel with a decorative surface layer with 3D visual effect produced by printing in only one layer. The ink drops 11 may be positioned over each other. The ink drops may be of variable sizes.

The larger ink drops may be positioned over smaller ink drops.

The layer may comprise bleached wood fibres and wear resistant particles cured with a thermosetting binder.

The layer may comprise wood fibres, wear resistant particles and a thermoplastic material. If the wood fibres are refined virgin wood fibres, the fibres may provide a natural base colour and the print may be a natural wood graining, preferably of the wood species of the refined virgin wood fibres. In an embodiment the decorative surface layer produced may look very much as an original wood veneer of said wood species.

An eleventh aspect of the invention not presently claimed is a method of manufacturing a building panel with a decorative surface layer. The panel comprises a core and the decorative surface comprises a print applied into a powder layer. The method comprises the steps below and preferably performed in the listed sequence:
- forming a mechanical locking system in the core;
- applying a powder layer on the core; and
- printing a pattern into the powder layer.

This methods allows that a large pattern can be formed that comprises several panels. The problems related to the positioning and forming of a locking system and the adjustment of the design due to material waste of surface material can be eliminated. The method may comprise an intermediate step where the panels are connected prior to the application of the powder layer. This makes it possible to cure or form the powder surface on large boards comprising several panels that are connected to each other. The surface may for example be cured by heat and pressure. The surface layer will crack along the panel edge when the panels are disconnected and the panels can be used without further machining of the edges. However, some further machining can be made in order to for example polish the edges or to make small bevels. This limited machining will generally not have any effect on the large pattern, that in spite of the fact that it comprises several panels, will look as one single large pattern or picture that can cover a large area of a floor or a wall. The panels can be marked, preferably with a digital print on the rear side, and this will facilitate installation.

Powder layers or a powder mix may in embodiments not presently claimed comprise several combinations of materials and chemicals and additional layers of such material combinations may be included for example:
- The layer may comprise essentially only one material such as small vinyl particles. No binders, pigments or wear resistant particles are needed in order to create a surface layer or a sub layer.
- Vinyl particles may be combined with a colour substance and/or fibres and/or wear resistant particles. Decorative particles can also be included in this mix.
- The layer may comprise a mix of fibres and binders. The fibres are preferably refined wood fibres, but may also be processed wood fibres or refined and processed wood fibres.
- Fibres may mixed with resins, for example thermosetting resins preferably melamine formaldehyde resins, thermoplastic resins or thermoplastic particles such that they can be connected to each other when for example heat and/or pressure is applied on the layer.
- A fibre/resin mix can comprise wear resistant particles and/or a colour substance. Decorative particles can also be included in this mix.

Embodiments not presently claimed may comprise a powder layer with wear resistant particles comprising aluminium oxide, silica and/or flour of stone.

Embodiments not presently claimed may comprise curing of a powder mix layer comprising applying heat, in the range of about 140 - 200 °C and applying pressure in the range of about 20 - 60 kg/cm2, preferably about 40 kg/cm2, in about 10 to about 60 seconds, preferably about 15 to about 35 seconds.

The following methods may be used separately or in combinations to cerate a digital print in the embodiments of this disclosure.

The ink may be a "spot colour" ink. The ink has in such an embodiment been specifically produced and adapted to a specific colour suitable for a specific image. Instead of creating the colour by mixing pixels of cmyk-colours the ink creating the spot colour pixel has a specific predetermined colour.

The print may be a "full print." This means that the visual printed décor is mainly created by the ink pixels applied into the powder. The colour of the powder has in such an embodiment in general a limited effect on the visible pattern or décor.

The print may also be a "part print". The colour of the powder, the board or another underlying layer is one of the colours that are visual in the final décor. The area covered by printed pixels and the amount of ink that is used can be reduced and cost savings can be obtained due to lower use of ink and increased printing capacity compared to a full print design.

The print may be based on the CMYK colour principle. This is a 4-colour setup comprising cyan, magenta, yellow and black. Mixing these together will give a colour space/gamut, which is relatively small. To increase specific colour or the total gamut spot colours can be added. A spot colour can be any colour. Additional colours such as orange, green, blue, red, light grey, and light colours of magenta and cyan or white can be used. These colours can be used separately or in combinations. The colours are mixed and controlled by software/hardware (print engine/print heads)

A high definition print in a powder layer requires a specific software program in order to control the printing hardware and to adopt it to the specific ink, printing method, distance from the printing head to the powder layer and the powder that is used. This software program is hereafter called "Digital Powder Raster Image Process" or DP-RIP and it is used to control printing speed, ink drop position, ink drop size and shape.

DP-RIP:s can be developed that allow that a print or decor can be positioned in several dimensions in powder horizontally and vertically in different depths. This can be used to create 3D effects and to increase the wear resistance. A specific advantage is that the print is extending from the upper part of the surface layer and downwards. This allows that a part of the print will always be at the surface even when a part of the surface is worn down. No protective layers are needed that disturbs the original design.

This new type of "Digital Injection Print" or DIP is obtained due to the fact that printing is made into a powder that is cured after printing. The print is embedded into the cured layer and is not applied on a layer as when conventional printing methods are used.

The DIP method may be used in all powder based materials, for example moulding compounds and similar plastic materials, which can be cured after printing. However, the DIP method is especially suitable to be used when printed powder layers have a thickness of about less than a few mm, preferably less than 1.0 mm are applied on a board material that can have a width of about 1.2 - 2.2 meters and a length of about 2.4 - 2.6 meters. Printing may of course also be made on individual panels, for example wall or floor panels or furniture components.

The thickness of the powder layers and the size of the powder particles in a high definition print, which requires several layers in order to create the necessary wear resistance, is an important part of the DIP method. The reason is that a high definition print requires a rather small drop size and such small drops can only be injected to a limited depth into the powder. Large powder particle will prevent the ink drops to penetrate below the upper surface of such large particles. It is preferred that the powder particles are small. Fibres should have a mean thickness of about less than 0.05 mm and an average length of less than 0.5 mm. Melamine powder and pigments should not exceed an average size of about 0.01 mm and wear resistant particles should have an average size of less than about 0.1 mm. The thickness of the printed and pressed layer should preferably be less than 0.1 mm and even more preferably less than about 0.05 mm especially when the layer is a top layer.

The fibre size may be measured in different ways:
- An actual individual fibre could be measured in diameter and length.
- A fibre size could be defined by the size of the mesh of the net in the sieve in which the fibres are separated by size and the wanted fraction is sorted out.

For refined fibres used in a wood fibre floor produced from an HDF-board the typical production steps are:
- To bring down the HDF-boards to flakes in a pre mill
- Bring down the flakes to the wanted size in a hammer mill
- Sieve the fibres in a net with a mesh size of 0.3 mm. Often such fibres are defined to be less than 0.3 mm in size. The diameter could though of course be less and the length could be longer due to the elongated shape of the fibre.

The distribution of the fibre sizes after sieving could be defined by measurements of the fibres.
For processed fibres (for example bleached fibres) the mesh size used is often smaller than the one for refined fibres. The sizes of the fibres are defined by the distribution of the sieved material. A typical distribution of fibres size is:
> 32 µm 43.6%
> 90 µm 9.3%
> 160 µm 0.4%

The distance from the printing head to the uncured powder layer is important for the printing quality and production costs. Static electricity can create production problems if the print head is positioned close to the powder surface. On the other hand a large distance and small drops will result in an inaccurate print pattern especially in a dusty environment and where airstreams may occur. This problem can be solved by for example adapting the powder such that it is distributed accurately on the substrate and stable when it is under the printing head. This allows that the print head can be positioned at a distance from the powder, which is less than 10 mm. A preferable distance is 2 - 5 mm.

The carrier for the powder layers may be a board material such as HDF, particle board, plywood, a plastic or mineral based core, a paper, a plastic foil or foam, a wood veneer, a cork layer and similar materials and combinations of these materials for example paper or wood veneer applied on a board material. Several core materials that generally are not used in conventional laminate production can be used when for example plastic powder is applied as a layer or when a separate surface layer is produced and glued to a core since the heat and applied pressure on the core can be reduced considerably or even eliminated. Heat can be applied with for example infrared light, hot rollers and similar.

Liquid preferably mainly water based chemicals or steam may be used prior or after the printing in order to stabilize the powder prior to printing or prior to pressing. Such stabilizing can also be obtained with separate ink heads that apply a suitable liquid substance. An extremely well distributed liquid substance can be applied with controlled drop size and this will improve the surface quality.

The DIP process itself can be used to stabilize and seal the upper part of the powder and preventing it from blowing away during pressing. A seal may be obtained if the ink, for example, comprises a binder or if the ink causes some parts of the powder mix to melt or glues together the powder particles. A melamine formaldehyde binder can, for example, be used together with a water-based ink and this will cause the melamine particles to melt and to bind the fibres, aluminium particles and colour pigments to a crusty and rather hard upper layer.

The cost of the ink can be reduced if, for example, the binder content of the ink can be reduced or eliminated. The decreased content of binder may be exchanged to pigments instead to increase colour gamut. Such a reduction can be obtained with a powder mix that comprises suitable binders that are used to bind the ink but also all other powder particles. The DIP method allows that binder free or essentially binder free inks can be used.

A control of the drop size is an essential part of the DIP method. Small drops, under 5 picoliters should preferably be used in high-resolution prints and a high quality seal of the powder surface can be obtained. Bigger drops, for example 5 -20 picoliters, will penetrate deeper in the powder layer as they have a bigger mass. They can also be fired from a greater distance, up to 25 mm from the powder surface. Bigger drop sizes can also allow bigger particle size in the ink and this can give more power (gamut) to the ink. However bigger drops will also take longer time to shoot, with less resolution. This can be used to optimize a design. Small drops can be applied on the top layer and bigger drops can be applied in layers under the top layer.

A suitable printer head has to be used in order to obtain a high printing quality and speed in powder base layers. A printer head has several small nozzles that can shoot droplets of inks in a controlled way (Drop On Demand - DOD). The size of each droplet can vary, dependant on ink type and head type, between normally 1-100 picoliters. Some printer heads can shoot different droplet sizes and they are able to print a grayscale. Other heads can only shoot one fixed droplet size.

Different technologies can be used to shoot the drops out of the nozzle.

Thermal printer head technology use print cartridges with a series of tiny chambers each containing a heater, all of which are constructed by photolithography. To eject a droplet from each chamber, a pulse of current is passed through the heating element causing a rapid vaporisation of the ink in the chamber to form a bubble, which causes a large pressure increase, propelling a droplet of ink out through the nozzle to the substrate. Most consumer inkjet printers, from companies including Canon, Hewlett-Packard, and Lexmark use thermal printer heads.

Most commercial and industrial inkjet printer heads and some consumer printers such as those produced by Epson, use the Piezoelectric/piezoelectric printer head technology. A piezoelectric material in an ink-filled chamber behind each nozzle is used instead of a heating element. When a voltage is applied, the piezoelectric material changes shape, which generates a pressure pulse in the fluid forcing a droplet of ink from the nozzle. Piezoelectric (also called Piezo) inkjet allows a wider variety of inks than thermal inkjet as there is no requirement for a volatile component, and no issue with kogation. The print heads are more expensive to manufacture due to the use of piezoelectric material (usually PZT, lead zirconium titanate).

Multipass printing, also called scanning printing, is a printing method where the printer head moves transverse over the substrate many time to generate an image. Such printers are slow but one small print head can generate a bigger image

Single pass printing uses fixed printer heads, with a width that corresponds to the width of the printed media, and the substrate moves under the heads. Such printers have a high capacity. HDF boards used in flooring production have generally a width of 1.4 -2.2 m. A high capacity single pass printer should therefore cover a considerable width. Such printers can be custom made for each application.

A lot of ink types can be used to print in powder based layers such as dye inks, solvent based inks, latex inks or UV curable Inks.

Inks are generally individually mixed together by using several chemicals. Water based inks are suitable to use in a DIP process. An example of such a water based ink mix is shown below.

| **Ink Component** | **Weight in %** | **Ink Function** |
|---|---|---|
| Water | 50-90 | Carrier |
| Colorant | 1-15 | Colour |
| Co-sovent / Humecant | 2-20 | Evaporation |
| Fixative | 0-10 | Fix ink to substrate |
| Surfactant | 0.1-6 | Adjust surface tension |
| Binder | 0.2 -10 | Durability, Adhesion |

The ink may also comprise rather small portions of chemicals 0.01-1% that prevent bacterial and fungal growth, corrosion and contamination and that control pH.

Most industrial single pass printers, which are used to for example to print ceramic tiles, have a width of 0.6 - 0.8 m. Two or three of such printers can be positioned side by side in a flooring line. Most floor designs, such as wood and tile designs, have a width of about 0.2 -0.4 m. The pressed board is, after pressing, sawn in a first step to such widths prior to the machining of the edges. This can be used to eliminate the need for a perfect coordination between different printers since the printers can work individually and the saw cut line can be used to separate the prints.

The most preferred combination is a single pass printer and water based inks.

The major advantages of the DIP method over conventional digital printing methods is the possibility to combine the flexibility that digital printing provides with high impact and wear resistance, deep embossing and clear advanced designs that are not disturbed by protective layers over the print. All these advantages are mainly obtained due to the fact that ink drops are injected into powder that after printing is cured to a solid surface layer.

Embodiments and details of various aspects can be combined with embodiments and detailed of the other aspects.

### Brief Description of the Drawings

Embodiments will in the following be described in connection to preferred embodiments and in greater detail with reference to the appended exemplary drawings, wherein,
- Figs 1a-b: Illustrate a known WFF panel and a know digital printing method;
- Figs 2a-b: Illustrate a method to form a decorative surface with a deep print;
- Figs 3a-e: Illustrate panels having a decorative surface with a digital print;
- Figs 4a-b: Illustrate panels having a decorative surface with a high definition print that extends deep into the surface;
- Figs 5a-e: Illustrate a method to make a decorative surface with a combination of a base colour, a print and a liquid colour substance;
- Figs 6a-d: Illustrate methods to form a decorative surface;
- Figs 7a-b: Illustrate alternative methods to form a decorative surface;
- Figs 8a-h: Illustrate methods to test wear resistance and print depth of a printed decorative surface;
- Fig 9: Illustrate a decorative surface produced by a combination of a base colour, printing and a liquid colour substance;
- Figs 10a-c: Illustrate a decorative surface with in register embossing and with a printed pattern that varies;
- Figs 11a-d: Illustrate a decorative surface comprising two powder layers and a print;
- Figs 12a-e: Illustrate a decorative surface with in register embossing and with a printed pattern that varies;
- Figs 13a-e: Illustrate a decorative surface and a print with drop size that varies between two layers;
- Figs 14a-e: Illustrate a production method to change the position of embossed portions in a panel surface;
- Figs 15a-e: Illustrate a production method to form panels that can create a synchronized large pattern;

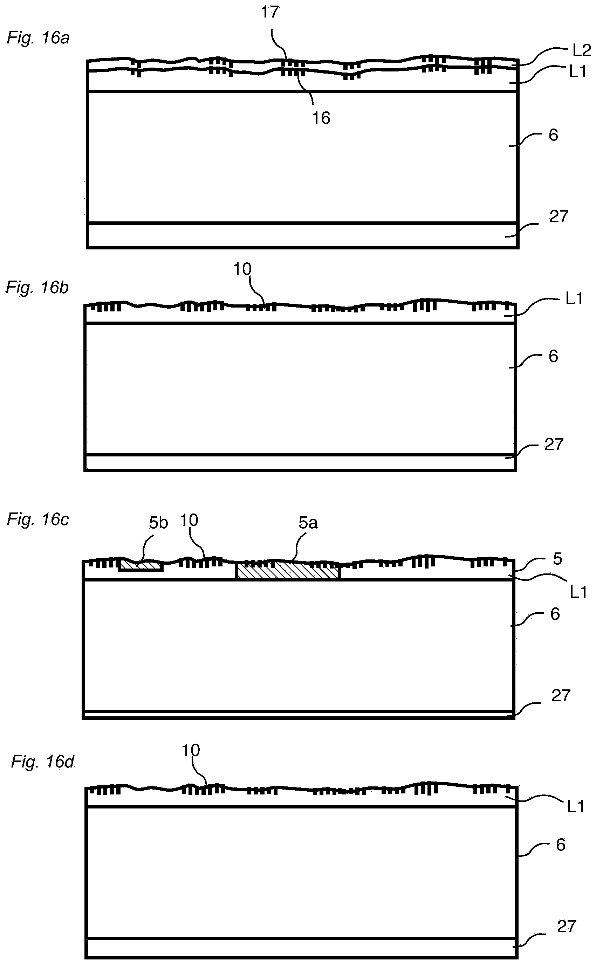

- Figs 16a-d: Illustrate examples of the embodiments of the invention not presently claimed;

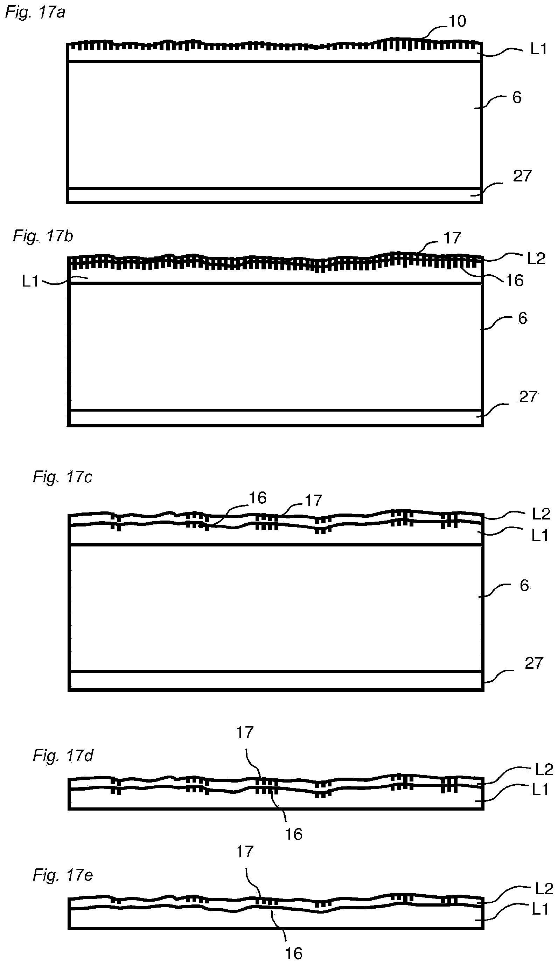

- Figs 17a-c: Illustrate examples of the embodiments of the invention not presently claimed.

### Detailed Description of Embodiments

Figure 1a shows the upper part of a known Wood Fibre Floor - WFF - as described in WO 2009/065769 (Applicant Välinge Innovation) with a solid decorative surface 5 comprising a mixture of fibres, preferably wood fibres 14, small hard wear resistant particles 12, 12', preferably aluminium oxide, and a binder 19, preferably thermosetting resin such as for example a melamine formaldehyde resin. A wide variety of designs can be obtained by mixing colour substances such, as for example, colour pigments with fibres, binders and aluminium oxide particles in dry form and by applying the WFF mix as powder on a core that is cured in a press under heat and pressure. Such a mix of materials comprising fibres, preferably wood fibres, binders, wear resistant particles and an optional colour substance that is applied as powder on a carrier is hereafter referred to as a "WFF mix". A mix that only comprises wood fibres and binder in powder form is hereafter referred to as a "Wood powder mix" such a mix can be used in applications where a high wear resistance is not needed for example in wall panels or furniture components.

Figure 1b shows a known digital printing method, which is described in WO 2009065769. A digital ink jet printing head 24 can be used to print a pattern on and into the powder before pressing such that the ink 32 penetrates about 0.1 -1 mm into the powder.

Such a method may for example be used to print grout lines and to create a tile pattern. The ink can penetrate deep into the powder and a printed pattern with a high wear resistance can be obtained. Rough wood grain structures can also be formed.

A deep print can be provided in several ways.

Ink may be used that penetrates into the fibres and that flows around and between the fibres. A deep penetration of for example 0.1 - 0.5 mm can be obtained if a sufficient amount of ink is applied on the powder. Such deep penetration can give a very high wear resistance. High quality laminate floorings have a wear resistance of 4000-6000 revolutions, which corresponds to the abrasion classes AC4 and AC5 measured with a Taber Abraser according to ISO-standard.

A deep print in a powder-based surface can be made that can obtain a wear resistance of 30,000 to 50,000 revolutions.

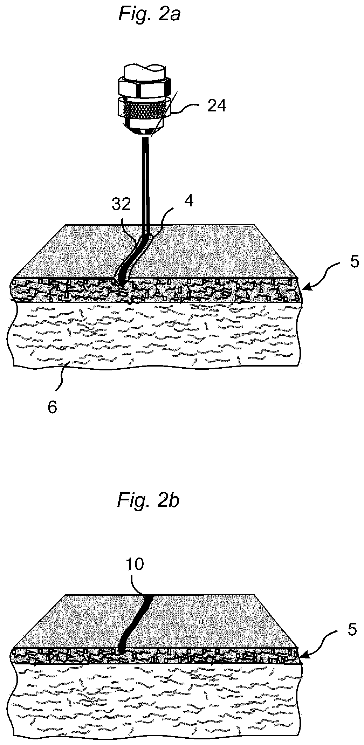

Figure 2 a shows that ink can also be applied by an ink head 24 with pressure that removes the powder based WFF mix 5 and forms a V or U formed groove 4. The walls and the inner lower parts 32 of the groove are coloured by the ink. A deep print 10 is obtained after pressing as shown in figure 2b. The ink head 24 is shown schematically.

A high definition digital printer with a resolution of for example 300 DPI sprays about 12 ink dots per mm that are about 0.05 mm wide.

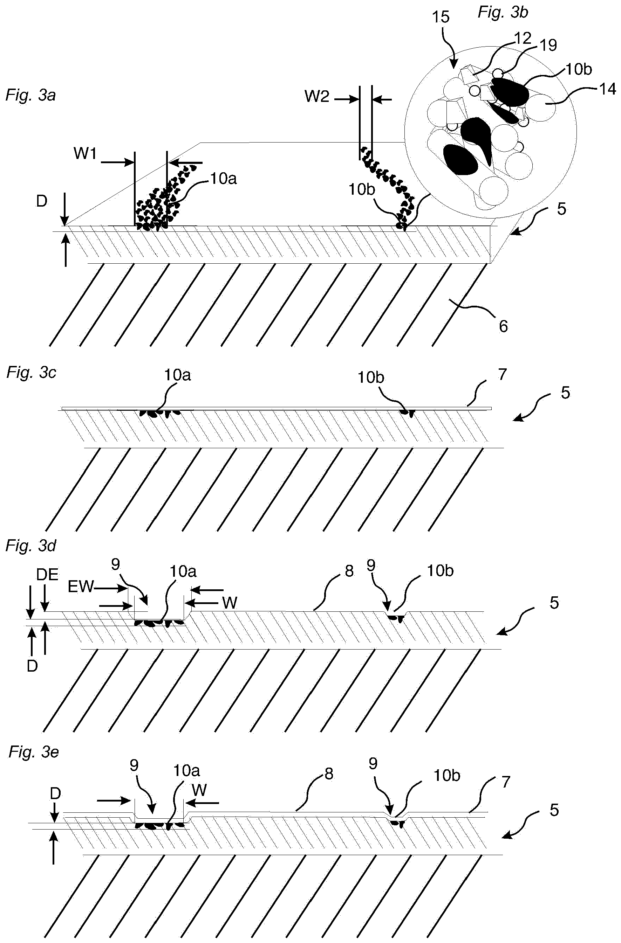

Figure 3a shows that a digital ink-printing device may be used to create a high definition print 10a, 10b in a WFF mix 5 or a wood powder mix that does not comprise any wear resistant particles. Figure 3b shows that the ink can be applied as a print 10b on all parts that are included in the mix. Fibres 14, preferably aluminium oxide particles 12 and melamine particles 19 are printed. The mix preferably also comprises a colour substance 15 (not shown) that provides a base colour. Such print can be made with the same quality as printing on paper especially if the drop size and the drop volume of the ink are adapted to the mix structure and the size of the fibres. The drop volume is measured in picoliters (1/1,000,000,000,000 of a litre) and can vary from for example 1 to 50 picoliters. The quality can be increased further if the powder for example is pre pressed before printing such that the fibres are not displaced horizontally during the final pressing and/or if small wood fibres with for example a width of less than 0.05 mm and length of less than 0.5 mm are used. The ink content can be rather low and the ink can be applied in a way that it is not floating along the fibres and between the fibre layers. The ink is during pressing mixed with the binders and partly pressed to the fibres. Such high definition print with a printing quality of 100 DPI and more can be obtained with a depth D that preferably is equal to the thickness of the fibres. The depth D of the print is about the same in prints 10a that have a considerable width WI of for example 1 mm and more as in prints 10b that are similar to thin lines with a width of for example 0.1 mm.

The wear resistance of a high definition print applied on a powder based WFF mix as described above and with a depth D of 0.03 - 0.05 mm can be about 2,000 - 3,000 revolutions provided that the mix comprises a sufficient content of wear resistant particles, for example 10 - 20 % (weight) aluminium oxide particles. This exceeds AC 3 (> 2,000 revolutions) and is sufficient for domestic applications.

Several methods can be used to increase the wear resistance further.

A transparent wear layer 7 can be applied over the print 10a, 10b as shown in figure 3c. Such wear layer can preferably comprise wear resistant particles preferably transparent aluminium oxide particles or a binder for example melamine or a mix of for example melamine powder and aluminium oxide particles that can be pressed into and on the print. This method can be used to increase the depth of the print and/or to increase the content of the wear resistant particles in the upper part of the surface. Even transparent or semi transparent alpha cellulose fibres can be included in the mix that can be applied as a dry powder layer or in liquid form. Conventional overlay used in conventional laminate flooring can also be used.

Figure 3d shows that the print 10a, 10b can be coordinated with an embossed surface. Such coordinated embossing can be very accurate and the tolerance between the print 10a and the embossed portions 9 can be much better than in conventional laminate where the printed paper swells during impregnation in an uncontrolled way and where the positioning of the paper increases the tolerances further. Coordinated embossing or embossing in register in powder-based surfaces as described above can be made with a tolerance that is less than 1.0 mm. A long and short edge of the board can be used as reference during printing and pressing. Printed positioning spots or lines can also be used. The print can be positioned very precisely in the lower parts of the embossed surface portion 9. The upper parts of the surface 8 will protect the print 10a, 10b from wear. The width EW of the embossed portion 9 can be made larger then than width W of the print 10a in order to eliminate production tolerances and to assure that the printed pattern is protected by surface portions, which are located above the print. The depth DE of the embossed portion can be about 0.05 - 0.10 mm and this is generally sufficient to increase the wear with for example 2000 - 4000 revolutions. A WFF mix allows that very deep embossing with an embossing depth DE of for example 0.10 - 1.0 mm can be formed and this can be used to produce floor panels with a very high wear resistance.

Figure 3e shows that all the described methods can be combined. A transparent wear layer can for example be provided over the embossed parts 9 with the print 10a, 10b located in the lower part of the embossing.

The ink content can be much lower than in other conventional digital printed surfaces where ink is applied on a paper. The powder in the WFF mix can be coloured with a base colour or several colours that are mixed together. A powder layer with one colour can be applied in patterns on another powder layer having a different colour. Such colours or combination of colours can for example provide the base colour or base pattern of a wood design. Only a very limited amount of ink is needed to for example create a wood grain structure on the base pattern or colour. The ink can cover less than 50% of the design. In some applications less than 30% or even less than 10% can be sufficient to obtain a wood design. Additional decorative substances can be sprayed over the base colour prior and/or after the printing step. Very advanced designs can be created with a combination of one of several powder layers comprising one or several base colours, digital ink jet printing and spraying of one or several colour substances.

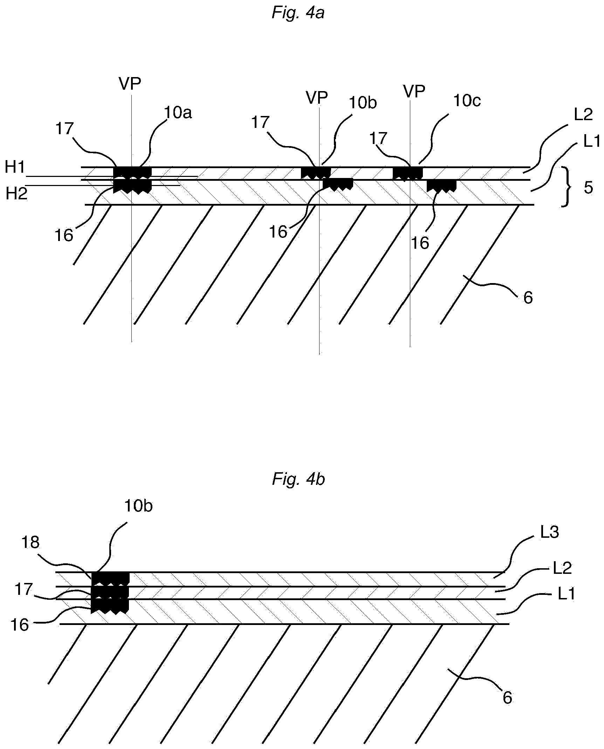

Figure 4a shows that a high definition print 10a can be combined with a high wear resistance. The first print 16 is provided on a first powder layer L1. A second powder layer L2 is applied on the first layer L1 and a second print 17 is provided on the second powder layer. The prints are positioned over each other such that parts of the two prints are preferably connected vertically. The wear resistance can be increased considerably and a high definition print with a wear resistance of for example 6,000 revolutions equal to AC 5 can be obtained. Such surface quality can be used in commercial applications. The surface layer 5 comprises a first horizontal plane H1 and a second horizontal plane H2 under the first horizontal plane H1 and a vertical plane VP perpendicular to the horizontal planes. The colour content of the print 10 is in this embodiment higher in a second horizontal plane H2 than in a first horizontal plane H1 located over the second horizontal plane. It is preferred that such variation of the colour content varies along the vertical plane VP. This means that the prints 16, 17 are positioned above each other and that the pattern will be substantially the same when the surface is subjected to wear. The prints 10b, 10c can also be made with a first 16 and a second 17 print that are offset but in contact or completely offset without contact along the vertical plane. The printed pattern will vary when the surface is subjected to wear. The two prints can have different designs. The colour and/or the pattern can for example be different in the first layer compared to the second layer.

The second layer L2 comprises preferably a WFF mix of 50 - 100 gram/m2.

Figure 4b shows that three prints provided on three layers can be used to reach a high definition print with a wear resistance of 9,000 revolutions similar to AC 6 (> 8,500 revolutions).

It is for example possible to apply 4- 10 layers and prints and this makes it possible to create a surface with the same structure as a solid wood veneer where the wood grains designs extend from the top to the bottom of the surface layer. The wear resistance can be extremely high and 20,000 - 30,000 revolutions can be reached.

Digital prints in one or several layers can be applied on a mix comprising different material compositions. All materials described above can be combined or used separately. A first and/or a second layer can for example comprise a mix of:
- Only plastic particles;
- Plastic particles with a colour substance;
- Plastic particles with wear resistant particles;
- Only fibres;
- Only binders;
- Only wear resistant particles;
- Only a colour substance;
- Fibres and a binder;
- Fibres and a colour substance;
- Fibres, binders and wear resistant particles;
- Fibres, binders and a colour substance; or
- Fibres, binders, colour substance and wear resistant particles.

Other materials such as fibres and/or colour substance and/or wear resistant particles and/or binders can be added after a first and/or a second print etc.

The binders in one layer can be used to cure a second layer since the binders will during pressing float between different layers.

The principles described above can be used to produce a panel where the powder and a print are applied on a core material. The principles can also be used to produce separate surface layers that can be glued to a core.

The principles can also be used in combination with other printing methods.

Digital ink printing can in all embodiments as described above be combined or replaced by other printing methods such as transfer printing, stamp printing and similar know methods.

Some or all of the layers L1, L2 and L3 can comprise transparent or semi transparent fibres preferably processed and bleached wood fibres. This can be used to create 3D effect as described in other sections below.

Wood fibres and transparent or semi transparent alpha cellulose fibres can in embodiments of this invention not presently claimed be replaced by thermo plastic powder, preferably vinyl powder. A binder is in such an embodiment not needed. It is preferred that such plastic particles have a diameter of about less than 0.3 mm, even more preferably about less than 0.1 mm. A digital print can be applied in one or several layers preferably comprising a transparent plastic mix of vinyl powder and preferably also wear resistant particles for example aluminium oxide particles. The plastic layers are exposed to heat and preferably also pressure. The surface is thereafter cooled and a perfect 3D design can be obtained with perfect visibility between the different transparent layers. A flexible plastic surface can be obtained with ink particles embedded into a plastic layer and such a surface layer can be combined with all types of core materials, preferably mineral based board materials, plastic boards or board material for exterior application that are not sensitive to moisture variations. Swelling and shrinking of the board and the surface in different humidity conditions can be avoided. It is preferred that the board surface is not visible. This can be obtained in several ways. The board can be coloured or coated with an impregnated paper. A plastic coloured sub layer can also be used as a base for the transparent layers. The plastic layers can also be mixed with wood fibres, preferably bleached semi transparent alpha cellulose fibres.

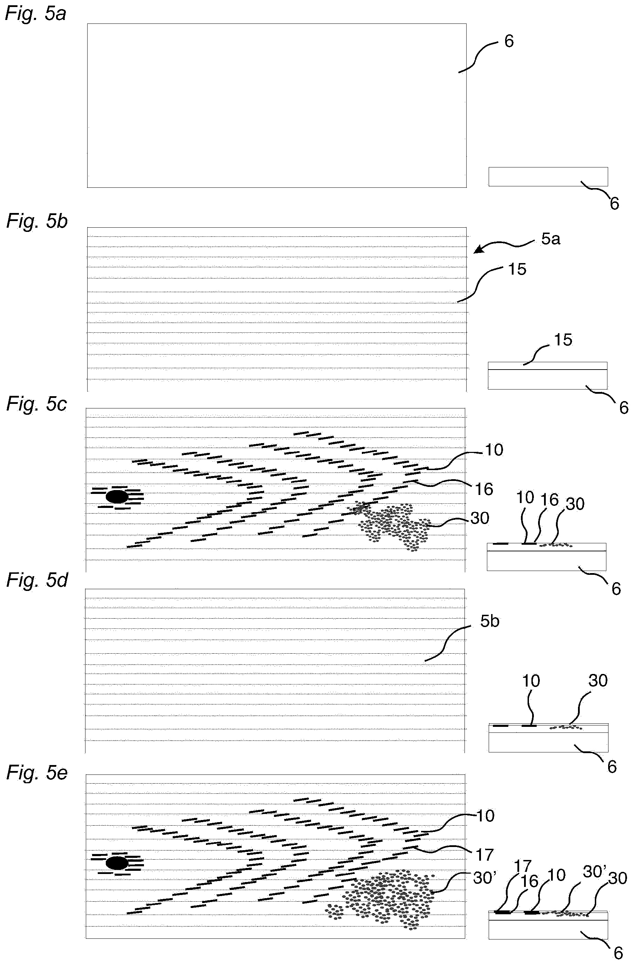

Figures 5a-5e show how a surface design can be formed that comprises a high definition print 10 that has a high wear resistance. A WFF mix 5a is applied on a carrier, for example a HDF core 6 as shown in figure 5b as a base layer. The mix comprises a base colour 15. A first digital ink print 16 is preferably applied on the base layer as shown in figure 5c. The ink can be water or solvent based. A liquid colour substance 30 is preferably sprayed on the first print and the base colour. Spraying can be used to coat the mix with small drops that are not individually controlled as in digital printing. Spraying can be used to create specific patterns with small drops that are applied at random within specific surface portions. A new WFF mix 5b is applied as a second layer on the first print 16. The second layer can have the same composition as the first layer. It can also have a different composition. The amount or size of the aluminium particles and/or binders can be different. The second layer has preferably a higher content of binders and/or wear resistant particles than the first layer. The thickness of the second layer is preferably 0.01 - 0.1 mm. This corresponds to about 10 -150-gram/ m2. A second print 17 is preferably applied on the second layer 5b as shown in figure 5e and a second liquid colour substance 30, is preferably sprayed over the second print.

Spraying of colour substances on one or several layers of a WFF mix can be made without printing in order to improve the decorative properties of the decorative surface layer 5. Wear resistant particles can be excluded if for example the intension is to produce panels for vertical or decorative applications.

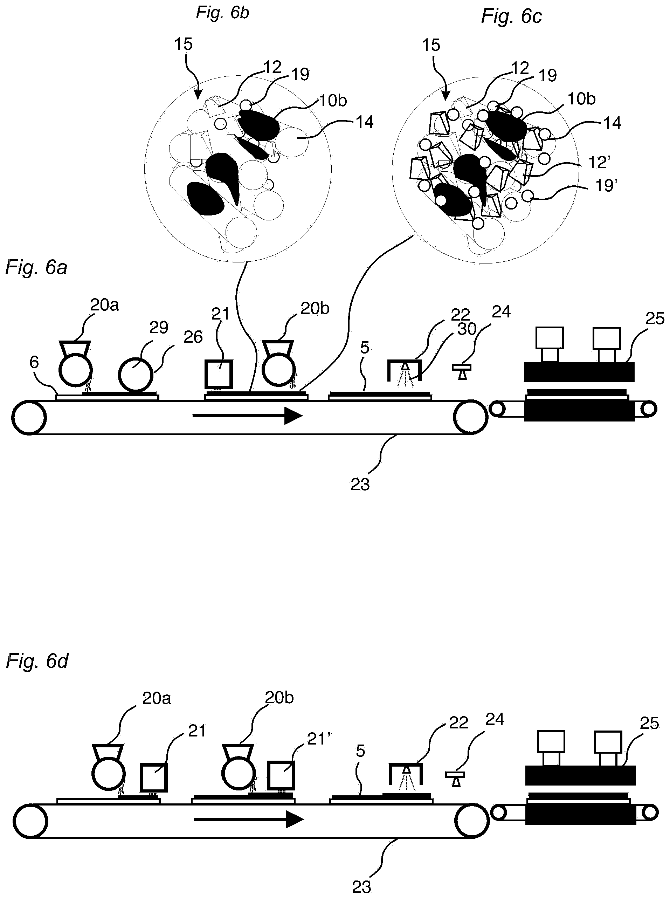

Figure 6a shows schematically a production line for production of a building panel comprising a decorative surface 5 connected to a core 6. A conveyor belt 23 moves the board 6 such that it passes several scattering station 20a, 20b. A scattering device 20a applies a WFF mix or a wood powder mix as a dry powder on a carrier 6 that preferably is sheet material, for example a HDF board. The mix is preferably pre pressed and the pre-pressing device is in this embodiment preferably a roller 29. Alternatively a discontinuous or continuous pressing device can be used. A balancing layer of for example impregnated paper or a powder layer is preferably applied prior to this first scattering provided on the rear side of the core 6.

A particular problem with pre pressing is that WFF powder will stick to the pressure surface 26 of the pre-pressing device 29 that is in contact with the powder. The fibres of the pre pressed surface will not form an even base for the print. This problem can be solved if the pressure surface 26 is a high gloss steal roller, band or plate. Sticking problems can be reduced or avoided with very high gloss pressure surfaces 26. A mix with low moisture content, preferably less than 6%, is also favourable in order to eliminate sticking problems.

A decorative pattern is provided on the WFF mix by a digital ink printing device 21. The print 10b is applied on the fibres 14 and all other parts included in the mix as shown in figure 6b.

Preferably a second scattering station 20b applies transparent aluminium oxide particles 12' and/or melamine powder 19' over the print 10b. A stabilizing unit 22 sprays a liquid substance preferably a water solution comprising de-ionized water over the WFF mix and the print 10b. This spaying prevents the powder to be displaced and to blow away during the final pressing operation. The stabilizing unit 22 can also comprise several spray heads that can apply one or several liquid colour substances 30 on the surface 5 in order to improve the decorative effects. A heating device 24 can be used to remove water from the colour or the water based stabilizing substance that is applied prior to pressing. The heating is preferably made with infra red lights. The core 6 and the printed surface 5 are finally pressed in a press 25 under heat and pressure such that the WFF powder and the print cures to a hard and wear resistant decorative surface layer.

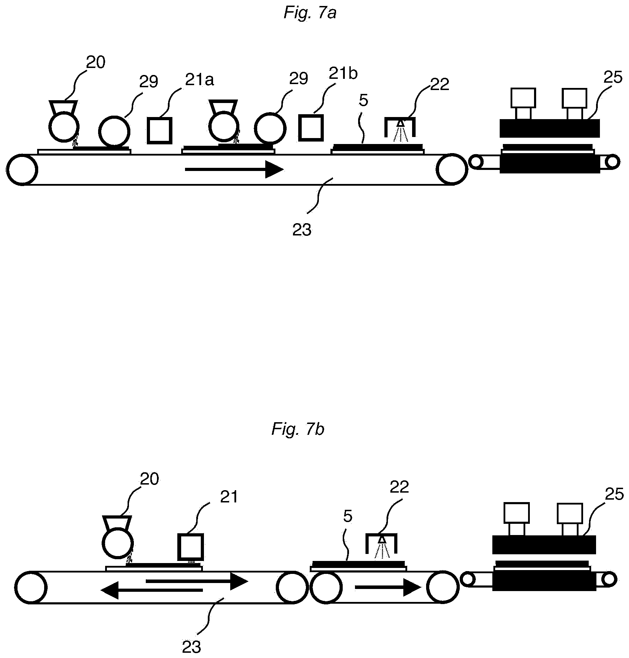

Figure 6d shows a similar production line. The difference compared to figure 6a is that there are two digital ink printing devices or printers 21, 21'. The first digital ink-printing device applies a print on a first layer of a WFF mix in the same way as in figure 6a. A second scattering unit 20b applies a second layer of a WFF mix over the first print and the second digital ink printing device 21' applied a second print over the second WFF layer. A liquid substance is sprayed over the surface by the stabilizing unit 22 and the panel is finally pressed in a press 25. Printing is in this embodiment applied on a scattered surface without pre pressing. It is obvious that the two production methods shown in figures 6a and 6d can be combined. One or several pre pressing steps can for example be provided prior to the printing as shown in figure 7a and a third or fourth scattering unit (not shown) can for example apply aluminium oxide and/or binders over the first and/or second print. A liquid colour substance can also be provided prior or after the first and/or the second print.

Figure 7b shows that one scattering unit 20 and one digital ink-printing device 21 can be used to apply and print several WFF layers. The conveyor is reversed after the first print and a second WFF layer can be applied and printed. The advantage is that the position of the board can be controlled very accurately and the prints can be positioned precisely over each other. These steps can be repeated and many layers and prints can be applied. Several alternative movements of the panel can be made. The panel can for example be displaced horizontally and perpendicularly to the feeding direction and than moved backwards by a second conveyor to the original starting position.

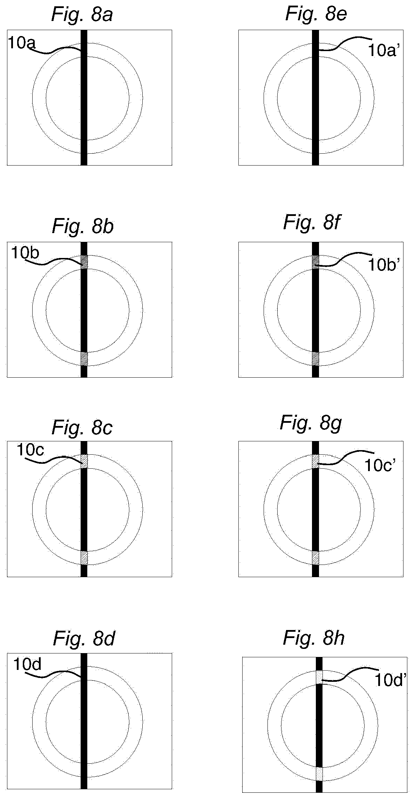

Figures 8a - 8c shows how that colour intensity 10a-10c decreases in a multi printed WFF layer when the surface is subject to wear according to the above-described Taber Abraser testing method. Figure 8a shows the original surface and figures 8b and 8c show the surface after, for example, 1000 - 2000 revolutions depending on the print quality. Figure 8d shows that the colour intensity increases again after for example 3000 revolutions due to the fact that the first printed layer becomes visible. Figures 8e - 8h shows a single print in a WFF layer. The colour intensity 10a' - 10d' decreases continuously when the surface is subject to wear.

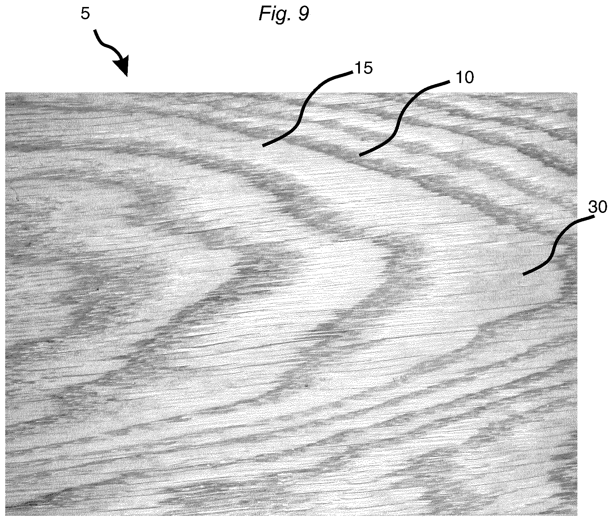

Figure 9 shows a surface layer 5 according to an embodiment of the invention with a decorative pattern that is a copy of a wood veneer. The decorative surface comprises a base colour 15, a digital ink print 10 and a liquid colour substance 30.

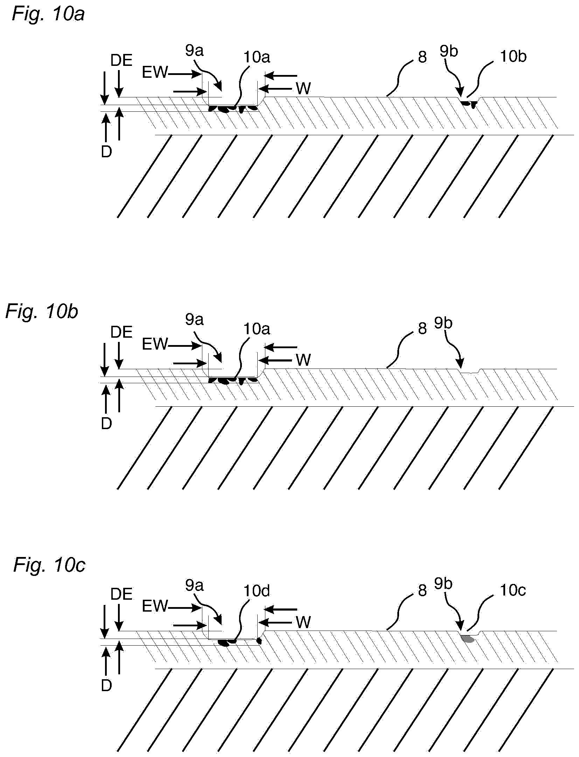

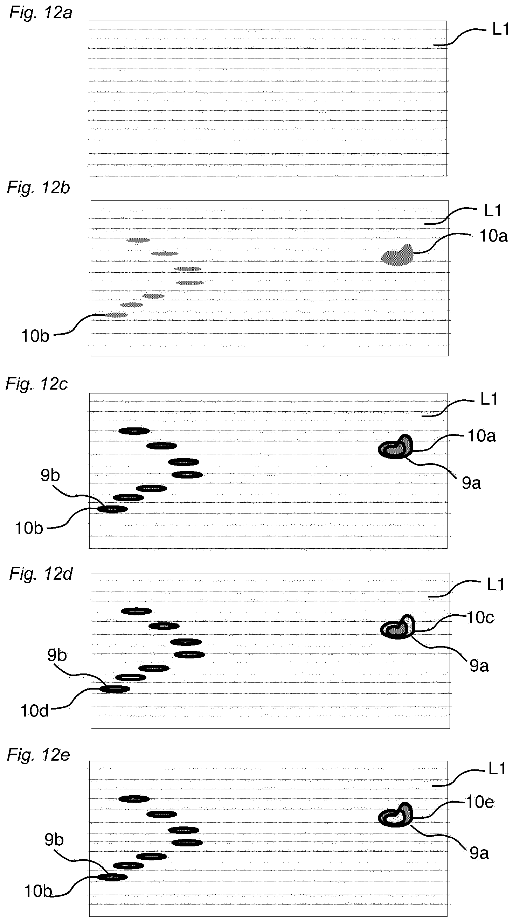

Embossing is preferably made when the powder mix is pressed against an embossed metal plate a matrix. In continuous presses an embossed metal belt or a matrix paper is used. The embossing structure is identical for all pressed boards and this gives a repetition effect. Such problems can be avoided if for example the print 10a, 10b varies between pressing steps as shown in figures 10a-10c. Figure 10b shows an embossed portion 9b that has no print. Figure 10c show embossed portions 9a and 9b that have a different print 10c, 10d than the print in 10a and 10b in figure 10a. The colour or the size of the print varies between the same embossed portions in different panels. Such a "variable in register embossing" will create a visual pattern that looks different in spite of the fact that embossing is identical. This is further shown in figures 12a - 12e. A first powder layer L1 and a first print 10a, 10b is applied on a board (figure 12b) and the board is pressed against an embossed press plate such that embossed portions 9a, 9b are formed in register with the print 10, 10b as shown in figures 12a-12c. Figures 12d and 12e show that the print can be changed between pressing operations. The print 10c, 10d as shown in figure 12d can be slightly different than a second print 10e, 10b in a second pressing as shown in figure 12e. Colours and shapes can be varied and visible repletion effects can be eliminated.

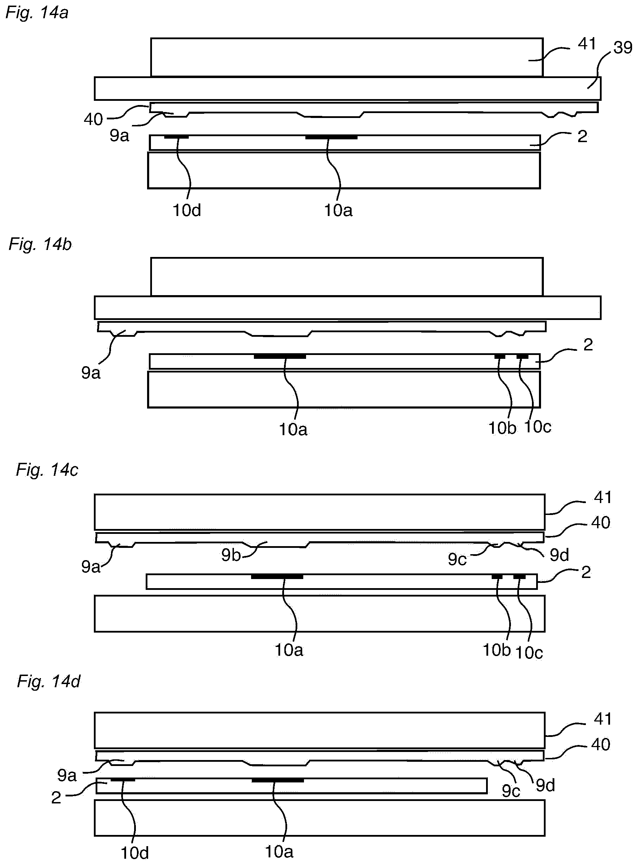

Repetition effects related to embossed structures can be further reduced if for example the press pate 40 is equipped with a sliding device as, shown in figures 14a-14d, that allows the press plate 40 with its embossed portions 9a, 9b, 9c and 9d to be displaced between the pressing steps and the position of the embossed structure on the floor panels can vary. The sliding device can be combined with a heating plate 39 that heats the parts of the press plate that are displaced outside the press table 41. Such a "sliding press plate embossing" requires that the position of the printed patter 10a, 10b as shown in figure 14a can also be adjusted. Digital printing allows that a different print 10a, 10b, 10c is applied on the board 2 as shown in figure 14b. As an alternative an embossed press plate that is larger than the pressed board 2 can be used and the position of the board can vary between different pressing steps as shown in figures 14c, 14d. This can be made in a simple way with digital printing and the printed pattern 10 can be adjusted such that it always is coordinate with the position of the press plate or the board.

All these principle can be combined and a vide range of individual panels with in register embossing but without visible repetition effects can be obtain. This method can be used in conventional laminate floors. The digital print is in such embodiments applied in the conventional way on the board or on a paper layer.

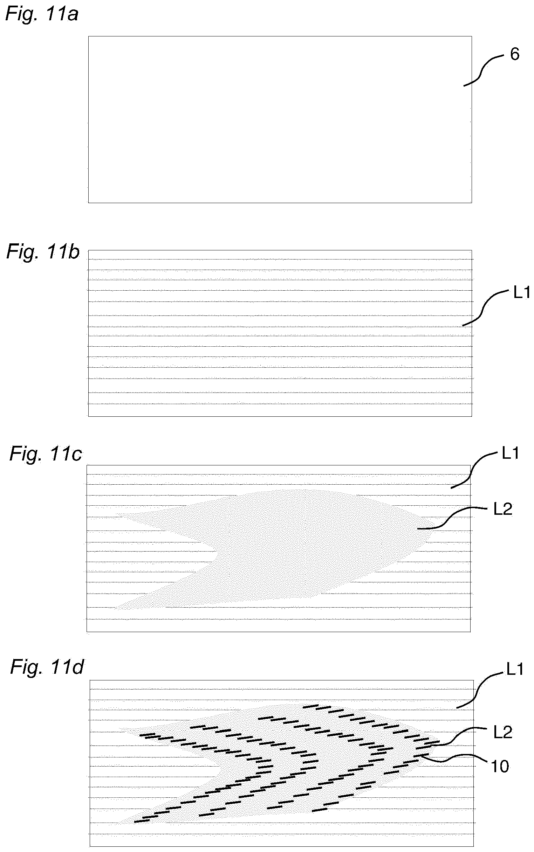

Figures 11a -11d show how several powder layers and a digital print can be combined to provide an advanced and cost effective printed pattern. A first powder layer L1 is applied on a board 6 as shown in figure 11b. The first powder layer L1 comprises a first base colour. A second powder layer L2 with a second base colour is applied on a part of the surface with by scattering through a template. A digital print is applied on the first and/or second layers. The advantage is that an advanced pattern can be created with limited ink and this can increase the printing speed.

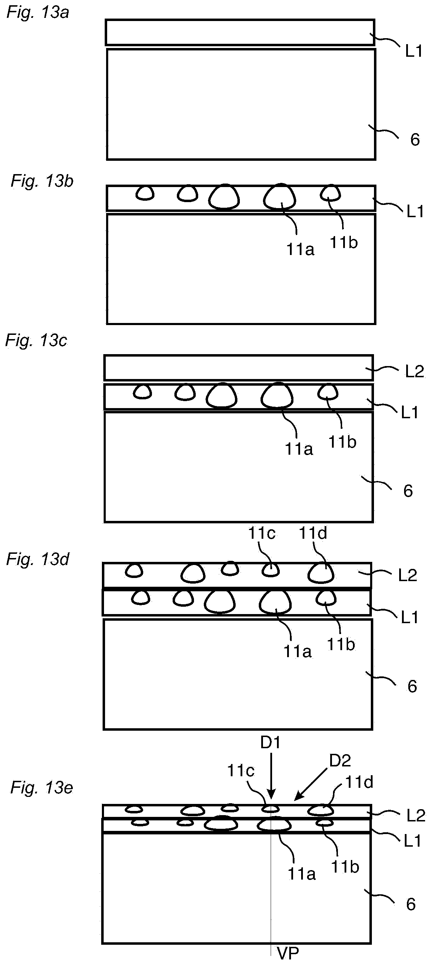

Figures 13a - 13d show that different drop sizes can be used, preferably in different semi transparent layers, in order to create an advanced 3D pattern. A first transparent or semi transparent powder layer L1 is applied on a core 6 that can have a virgin colour or that can be coloured in the conventional way of by a powder layer that has been applied on the core and that comprises a base colour. A digital print injects ink drops 11a, 11b into the first powder layer L1 as shown in figure 13b. A second transparent or semi transparent powder layer L2 is applied on the first powder layer L1 and a second digital print injects ink drops 11c, 11d into the second and upper top layer L2. The ink drops in the second layer can be smaller and this gives a high definition print. Drops that are position vertically over each other along a vertical plane VP can create the visible pattern. Such drops can have different size and colour. The design will look different if it is looked upon vertically in the D1 direction or from an angle in the D2 direction as shown in figure 13e and this will create an advance design that is not possible to obtain when a print is provided by placing drops on a layer side by side.

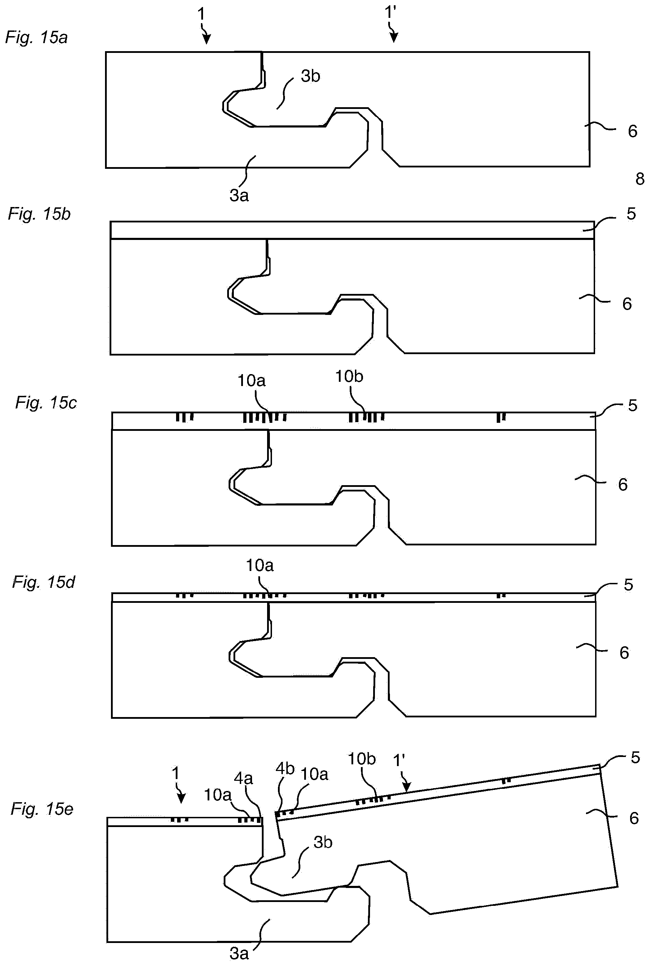

Figures 15a 15e show how a large pattern can be formed that comprises several building panels 1,1'. The problems related to the positioning and forming of a locking system and the adjustment of the design due to material waste of surface material can be eliminated. A locking system 3a, 3b is machined in a core material 6 for example HDF as shown in figure 15a and the panels 1,1' are connected to a large board. A powder mix, preferably a WFF mix, is applied on the connected panels and the mix is printed with a print 10a, 10b as shown in figures 15b, 15c. The board comprising several panels is pressed and the surface is cured. The surface will crack along the joint 4a, 4b when the panels are released from each other as shown in figure 15e. Surprisingly a powder based surface will crack along a very straight line and the panels can be used and connected without any further machining of the edges 4a,4b. However, some further machining can be made in order to for example polish the edges or to make small bevels. This limited machining will generally not have any effect on the large pattern, that in spite of the fact that it comprises several panels, will look as one single large pattern or picture that can cover a large area of a floor or a wall.

Where the term "Powder Layer" is used as a term for a pressed board it is meant a layer that was distributed as powder prior to pressing.

### EXAMPLES

The terms used in the examples below are defined as follows:
Base colour powder layer is a powder layer with a specific colour that aims to be fully or partly visual in the final product. The colour is typically created by mixing pigment to the powder. A base colour powder layer can cover parts of or the full surface.

Semicoloured transparent layer is a WFF layer, which comprises one part of base, colour powder and 5-20 parts of semi-transparent like the exemplary recipe below. This mixture is used to keep the colour at the same colour gamut as the base colour powder layer.

Semi-transparent layer - a WFF layer that is transparent or semi-transparent after pressing. This layer is adapted to be suitable to print in. A typical composition of such a layer is: 1 part alpha cellulose, 0.5-1 part aluminium oxide, 1-1.5 part melamine. A layer of for example 100 gram/m2 is quite transparent but a layer of 600 grams/m2 is very "milky".

### EXAMPLE 1:

On a HDF board with a thickness of 9,8 mm, two backing papers NKR 140 where fixed on backside for balancing, a WFF powder formulation was added, comprising of 24.5 % wood fibre, 17.5 % aluminium oxide, 10.5 % titanium dioxide as pigment and 47.5 % melamine resin.

The WFF powder mix was applied as a first layer by a so-called scattering machine, which distributed the WFF powder material evenly over the HDF surface. The totally amount of WFF powder was 400 g/m².

A print was applied on the powder by a digital printing device and with a printing quality of 300 DPI.

A second layer with the same composition as the first layer and with an amount of about 100 g/m2 was applied over the first layer and over the print.

A second print was applied on the second layer as a matching pattern located over the first print.

The WFF powder was fixed on the HDF board by spraying a water solution comprising of 97 % de-ionize water, 1 % BYK-345 (reducing surface tension) and 2 % of Pat 622/E (release agent) on the WFF powder.

The above material was placed into a so-called DPL press and pressed at 40 bar in 25 sec with a temperature on the upper daylight at 160 °C and the bottom daylight at 165 °C.

A powder based solid surface with a high definition print and with a wear resistance exceeding 6,000 revolutions according to the abrasion class AC5 measured with a Taber Abraser according to ISO-standard was obtained.

### EXAMPLE 2:

Example 1 was repeated with the first WFF powder layer pre pressed prior to the first printing and the second WFF layer pre pressed prior to the second printing.

A powder based solid surface with a high definition print and with a wear resistance exceeding 6,000 revolutions according to the abrasion class AC5 measured with a Taber Abraser according to ISO-standard was obtained. The printed pattern in example 2 was more distinct then the pattern in example 1.

All examples below are described from top surface and then down trough the structure.

### EXAMPLE 3

### Fig. 16a

### Print 17 (part or full print, spot or cmyk-print)

Base colour powder layer L2 or Semi-coloured transparent layer, 41-208g/m2 preferbly 125 g/m2.

### Print 16 (part or full print, spot or cmyk-print)

Base colour powder layer L1 125g/m2-833g/m2, preferably 500g/m2.

### Core 6

### Backing/balancing layer 27

By adapting the ratio between the powder layers an acceptable wear picture can be achieved until the lower layer of print is worn down.

### EXAMPLE 4

### Fig. 16a

### Print 17 (part or full print, spot or cmyk-print)

Transparent powder layer consisting of thermoplastic particles and wear resistant particles L2 or Semi-coloured transparent layer consisting of thermoplastic particles, wear resistant particles and pigments, 30-500 g/m2 preferably 100-300 g/m2. Also alpha-celluslose particles can be incorporated into the transparent or Semi-coloured transparent layer.

### Print 16 (part or full print, spot or cmyk-print)

Base colour powder layer L1 125g/m2-833g/m2, preferably 500g/m2.

### Core 6

### Backing/balancing layer 27

By adapting the ration between the powder layers an acceptable wear picture can be achieved until the lower layer of print is worn down.

### EXAMPLE 5

### Fig. 16b

### Spot colour ink, part print 10

Base colour powder layer 125g/m2-800g/m2, preferably 625g/m2 L2

### Core 6

### Backing/balancing layer 27

Simple and low cost printer configuration due to only one colour to print. Low ink consumption since parts of the visual colour is created by the powder.

### EXAMPLE 6

### Fig 16c

### Spot colour ink, part print 10

Base colour powder layer 5 or Semi-coloured transparent layer, partly covering the surface (scattered with or without coordination with the print) 40g/m2-125g/m2, preferbly 125g/m2
Base colour powder layer 5a, 5b (differs in colour compared to the other base colour layer) 125g/m2-800g/m2, preferably 625g/m2

### Core 6

### Backing/balancing layer 27

Comment type 2 - Same as type 1 but more advanced design possible since two or several powder colours and one print colour are visual in the final in the final product.

### EXAMPLE 7

### Fig. 16d

### CMYK part print 10

Base colour powder layer L1, 125g/m2-800g/m2, preferably 625g/m2.

### Core 6

### Backing/balancing layer 27

Comment type 3 - same as type 1 but a standard cmyk configured printer concept can be used.

### EXAMPLE 8

### Fig. 17a

### CMYK full print 10

Semi-transparent layer or Semi-coloured transparent layer L1, 125g/m2-800g/m2, preferably 625g/m2.

### Core 6, backing 27

Comment type 4 - due to the semi-transparent layer a 3 dimensional visual effect can be achieved that enhances the product appearance. Very good wear resistance properties can be reached corresponding to AC3 according to standard EN 13329:2006+A1:2008.

### EXAMPLE 9

### Fig. 17b

### CMYK full print 17

Semi-transparent or Semi-coloured transparent layer L2 (for example, 150 gram/m2) CMYK full print 16
Semi-transparent or Semi-coloured transparent layer L2 (typically thicker than the upper layer - for example 400 gram/m2)

### Core 6

### Backing/balancing layer 27

Comment type 5 - better wear resistance than type 4 due to double print and scattering generating a real 3 dimensional print in the wear layer.

### EXAMPLE 10

### Fig. 17c

### Print 17 (cmyk or spot-colour, part or full print)

Semi-transparent layer L2, 40g/m2-300g/m2, preferably 125g/m2.

### Print 16 (cmyk or spot-colour, part or full print)

Base colour powder layer L1, 125g/m2-800g/m2, preferably 500g/m2.

### Core 6

### Backing/balancing layer 27

Comment to example 10 -good wear resistance due to double print layer and scattering. The base colour of the lower powder layer covers the substrate colour and functions as one of the visual colours when the printed layers only is part printed. Very good wear resistance properties can be reached, over AC6 according to standard EN 13329:2006+A1:2008.

The product can be tailor made to meet the requirements of most wear situations by additional powder and print layers.

This embodiment has been produced in three different modes regarding print layer thickness.

### Print (cmyk or spot-colour, part or full print)

Semi-transparent layer, *called STL in description below.*

### Print (cmyk or spot-colour, part or full print)

Base colour powder layer, *called BPL* in *description below.*

### Core

### Balancing layer/backing

| **Type** | **BPL** | **STL** | **Abrasion(REV)** | **Comment** |
|---|---|---|---|---|
| TYPE 9a | 375 g/m2 | 250 g/m2 | >19,000 | A |
| TYPE 9b | 458 g/m2 | 166 g/m2 | 15,000 | B |
| TYPE 9c | 541 g/m2 | 83 g/m2 | 7,000 | C |

### Comments:

**A.** Very durable but a bit of haze appears due to thick semi-transparent print layers. The printed pattern is still intact after 19,000 revolutions.
**B.** Best mode, nice crisp colours in print all through the abrasion process.
**C.** Nice crisp colours all through abrasion process but not so good in abrasion properties due to very thin semi-transparent print layer.

### EXAMPLE 11

### Fig. 17d

### Print 17 (cmyk or spot-colour, part or full print)

Transparent or semi-transparent layer L2 made of thermoplastic particles and aluminium oxide particles, 40g/m2-300g/m2, preferably 125g/m2.

### Print 16 (cmyk or spot-colour, part or full print)

Base colour powder layer consisting of refined fibres and thermoplastic particles L1, 125g/m2-5000g/m2, preferably 200-1000g/m2 if the produced layer should be glued to another core or 1000-5000 g/m2 if the material it self should be machined with mechanical locking systems for floating installation. For thicker panels even more material can be used.

### EXAMPLE 12

### Fig. 17e

### Print 17 (cmyk or spot-colour, part or full print)

Transparent or semi-transparent layer L2 made of thermoplastic particles and aluminium oxide particles, 40g/m2-300g/m2, preferably 125g/m2.

Base colour powder layer consisting of refined fibres and thermoplastic particles L1, 125g/m2-5000g/m2, preferably 200-1000g/m2 if the produced layer should be glued to another core or 1000-5000 g/m2 if the material it self should be machined with mechanical locking systems for floating installation. For thicker panels even more material can be used.

### EXAMPLE 13

All described samples mentioned so far in this text have been made with a scanning Epson print head shooting 3,5 pl drops at a resolution corresponding to 720X720.

Wear resistant particles can in all examples above be excluded if the intention is to produce a panel for vertical application where a high wear resistance is not needed. Binders and preferably also fibres in all examples above can be excluded if thermoplastic powder particles are used that melts together when exposed to heat.

## Claims

1. Building panels (1, 1') comprising a decorative surface layer (5) connected to a core (6) wherein the decorative surface layer (5) comprises a digital print (10) on a paper, forming a printed pattern in register with embossed surface portions (9), wherein at least two building panels (1,1') comprise surface portions of the decorative surface layer (5) with an identical embossing and with the printed pattern on the paper that varies between said building panels (1, 1'), wherein embossed surface portions (9) of one building panel have a different digital print than embossed surface portions (9) of another building panel, **characterised in that** an embossed surface portion has no print.

2. The building panels (1, 1') as claimed in claim 1, wherein the printed pattern is partially or completely coordinated with the embossed surface portions (9).

3. The building panels (1, 1') as claimed in any one of claims 1-2, wherein the colour or the size of the digital print (10) varies between the same embossed surface portions (9) in different building panels.

4. A method to produce building panels (1,1') comprising a decorative surface layer (5) connected to a core (6), wherein the decorative surface layer comprising a digital print and embossed surface portions, wherein the decorative surface layer comprises surface portions with a printed pattern that is in register with the embossing, the method comprising
applying a digital print forming a printed pattern on a paper forming a decorative surface layer,
wherein at least two panels comprise surface portions wherein the printed pattern varies between said at least two building panels,
connecting the paper forming the decorative surface layer with the printed pattern to a core (6) and embossing said surface portions wherein the printed pattern varies between said at least two building panels with an identical embossing, and wherein embossed surface portions (9) of one building panel have a different digital print than embossed surface portions (9) of another building panel, **characterized in that** an embossed surface portion has no print.

5. The method as claimed in claim 4, wherein the printed pattern is partially or completely coordinated with the embossed surface portions (9).

6. The method as claimed in any one of claims 4-5, wherein the colour or the size of the digital print (10) varies between the same embossed surface portions (9) in different building panels.

## Patentansprüche

1. Gebäudepaneele (1, 1'), die eine Zier-Oberflächenschicht (5) umfassen, die mit einem Kern (6) verbunden ist, wobei die Zier-Oberflächenschicht (5) einen digitalen Aufdruck (10) auf einem Papier umfasst, der ein aufgedrucktes Muster bildet, das an geprägte Oberflächen-Abschnitte (9) angepasst ist, wobei wenigstens zwei Gebäudepaneele (1, 1') Oberflächen-Abschnitte der Zier-Oberflächenschicht (5) umfassen, bei denen eine Prägung identisch ist und das aufgedruckte Muster auf dem Papier zwischen den Gebäudepaneele (1, 1') variiert, und geprägte Oberflächen-Abschnitte (9) eines Gebäudepaneels einen anderen digitalen Aufdruck aufweisen als geprägte Oberflächen-Abschnitte (9) eines anderen Gebäudepaneels, **dadurch gekennzeichnet, dass** ein geprägter Oberflächen-Abschnitt keinen Aufdruck aufweist.

2. Gebäudepaneele (1, 1') nach Anspruch 1, wobei das aufgedruckte Muster teilweise oder vollständig mit den geprägten Oberflächen-Abschnitten (9) koordiniert ist.

3. Gebäudepaneele (1, 1') nach einem der Ansprüche 1-2, wobei die Farbe oder die Größe des digitalen Aufdrucks (10) zwischen den gleichen geprägten Oberflächen-Abschnitten (9) an unterschiedlichen Gebäudepaneele variiert.

4. Verfahren zum Herstellen von Gebäudepaneele (1, 1'), die eine Zier-Oberflächenschicht (5) umfassen, die mit einem Kern (6) verbunden ist, wobei die Zier-Oberflächenschicht einen digitalen Aufdruck und geprägte Oberflächen-Abschnitte umfasst und die Zier-Oberflächenschicht Oberflächen-Abschnitte mit einem aufgedruckten Muster umfasst, das an die Prägung angepasst ist, und das Verfahren umfasst:
Aufbringen eines digitalen Aufdrucks, der ein aufgedrucktes Muster bildet, auf ein Papier, das eine Zier-Oberflächenschicht bildet,
wobei wenigstens zwei Gebäudepaneele Oberflächen-Abschnitte umfassen, an denen das aufgedruckte Muster zwischen den wenigstens zwei Gebäudepaneele variiert,
Verbinden des Papiers, das die Zier-Oberflächenschicht mit dem aufgedruckten Muster bildet, mit einem Kern (6) und Prägen der Oberflächen-Abschnitte, wobei das aufgedruckte Muster zwischen den wenigstens zwei Gebäudepaneele mit einer identischen Prägung variiert, und wobei geprägte Oberflächen-Abschnitte (9) eines Gebäudepaneels einen anderen digitalen Aufdruck aufweisen als geprägte Oberflächen-Abschnitte (9) eines anderen Gebäudepaneels,
**dadurch gekennzeichnet, dass** ein geprägter Oberflächen-Abschnitt keinen Aufdruck aufweist.

5. Verfahren nach Anspruch 4, wobei das aufgedruckte Muster teilweise oder vollständig mit den geprägten Oberflächen-Abschnitten (9) koordiniert ist.

6. Verfahren nach einem der Ansprüche 4-5, wobei die Farbe oder die Größe des digitalen Aufdrucks (10) zwischen den gleichen geprägten Oberflächen-Abschnitten (9) an unterschiedlichen Gebäudepaneelen variiert.

## Revendications

1. Panneaux de construction (1, 1') comprenant une couche de surface décorative (5) connectée à un noyau (6) où la couche de surface décorative (5) comprend une impression digitale (10) sur un papier, formant un motif imprimé dans un registre avec des portions de surfaces bosselées (9), où au moins deux panneaux de construction (1, 1') comprennent des portions de surface de la couche de surface décorative (5) avec un bosselage identique et avec le motif imprimé sur le papier qui varie entre lesdits panneaux de construction (1, 1'), où des portions de surfaces bosselées (9) d'un panneau de construction présentent une impression digitale différente de celle des portions de surfaces bosselées (9) d'un autre panneau de construction, **caractérisés en ce qu'**une portion de surface bosselée ne présente pas d'impression.

2. Panneaux de construction (1, 1') selon la revendication 1, où le motif imprimé est partiellement ou complètement coordonné avec les portions de surface bosselées (9).

3. Panneaux de construction (1, 1') selon l'une quelconque des revendications 1-2, où la couleur ou la dimension de l'impression digitale (10) varie entre les mêmes portions de surfaces bosselées (9) dans différents panneaux de construction.

4. Procédé de production de panneaux de construction (1, 1') comprenant une couche de surface décorative (5) connectée à un noyau (6), où la couche de surface décorative comprenant une impression digitale et des portions de surfaces bosselées, où la couche de surface décorative comprend des portions de surfaces avec un motif imprimé qui se trouve dans un registre avec le bosselage, le procédé comprenant
l'application d'une impression digitale formant un motif imprimé sur un papier formant une couche de surface décorative,
où au moins deux panneaux comprennent des portions de surfaces où le motif imprimé varie entre lesdits au moins deux panneaux de construction,
la connexion du papier formant la couche de surface décorative avec le motif imprimé à un noyau (6) et le bosselage desdites portions de surfaces où le motif imprimé varie entre lesdits au moins deux panneaux de construction avec un bosselage identique, et où des portions de surfaces bosselées (9) d'un panneau de construction présentent une impression digitale différente de celle des portions de surfaces bosselées (9) d'un autre panneau de construction, **caractérisé en ce qu'**une portion de surface bosselée ne présente pas d'impression.

5. Procédé selon la revendication 4, où le motif imprimé est partiellement ou complètement coordonné avec les portions de surfaces bosselées (9).

6. Procédé selon l'une quelconque des revendications 4-5, où la couleur ou la dimension de l'impression digitale (10) varie entre les mêmes portions de surfaces bosselées (9) dans des panneaux de construction différents.
